# EUROPÄISCHE PATENTANMELDUNG

(11) **EP 2 824 326 A1**
(43) Veröffentlichungstag der Anmeldung: **14.01.2015**
(21) Anmeldenummer: 14174018.3
(22) Anmeldetag: 26.06.2014
(51) Int. Cl.: F03D 11/00, G01M 11/08

(54) **Vorrichtung zur Inspektion von Rotorblättern einer Windkraftanlage**

(30) Priorität: 10.07.2013 DE 102013107273
(71) Anmelder: Sebald, Bernd, 89191 Nellingen/Alb (DE)
(72) Erfinder: Sebald, Bernd, 89191 Nellingen/Alb (DE)
(74) Vertreter: Ruckh, Rainer Gerhard

(57) **Zusammenfassung**

Die erfindungsgemäße Vorrichtung dient zur Inspektion von Rotorblättern (2) einer Windkraftanlage (1). Die Rotorblätter (2) sind in oder an einem Turm (4) gelagert. Eine höhenverstellbare Sensoranordnung (5) ist vorgesehen, mittels derer eine Inspektion der Rotorblätter (2) über deren gesamten Längen durchführbar ist. Weiterhin sind Stellmittel für die Rotorblätter (2) vorgesehen, welche dazu ausgebildet sind, die Rotorblätter (2) um ihre Längsachsen in einem Winkelbereich von 360° zu drehen, so dass mit der Sensoranordnung (5) die gesamten Oberflächen der Rotorblätter (2) erfassbar sind.

## Beschreibung

Die Erfindung betrifft eine Vorrichtung einer Windkraftanlage.

Derartige Windkraftanlagen weisen generell eine Anordnung von Rotorblättern auf, die an einem Turm gelagert sind. Die durch den Wind verursachte Drehung der Rotorblätter wird in bekannter Weise zur Generierung von elektrischer Energie genutzt.

Naturgemäß sind derartige Windkraftanlagen im Außenbereich angeordnet, insbesondere an windexponierten Orten, wie zum Beispiel auch auf See. Durch die starken Windeinflüsse verschleißen die Rotorblätter. Beispielsweise entstehen im Lauf der Zeit Risse in den Oberflächen der Rotorblätter oder Delaminationen, das heißt ein Ablösen des Farbanstrichs der Rotorblätter. Auch durch Blitzschlag können erhebliche Schäden der Rotorblätter entstehen.

Um Beschädigungen der Rotorblätter rechtzeitig vor deren Ausfall zu erkennen ist es bekannt, diese Rotorblätter mit Inspektionsvorrichtungen zu untersuchen. Eine Möglichkeit der Inspektion von Rotorblättern besteht darin, Flugkörper in Form von Drohnen oder dergleichen einzusetzen, die mit Kameras bestückt sind. Diese Drohnen fliegen dann um die Windkraftanlage, so dass mit den Kameras Bilder von den Rotorblättern aufgenommen werden, anhand derer dann eine Oberflächeninspektion durchgeführt wird.

Abgesehen davon, dass diese Methode einen hohen konstruktiven Aufwand bedingt, besteht ein weiterer Nachteil darin, dass diese Art der Inspektion nur bedingt reproduzierbare Messergebnisse liefert, da der Abstand der Kameras zu den Rotorblättern nur sehr eingeschränkt vorgegeben werden kann. Damit wird keine gleichbleibende reproduzierbare Bildqualität der mit den Kameras aufgenommenen Bilder erhalten. Ein weiterer wesentlicher Nachteil besteht darin, dass diese Prüfung der Rotorblätter nur bei ruhigem Wetter durchgeführt werden kann, während bei stürmischem Wetter die Drohnen die Rotorblätter nicht anfliegen können.

Aus der US 8 171 809 B2 ist eine Inspektionsvorrichtung mit Sensoren wie zum Beispiel Kameras bekannt. Zur Durchführung der Inspektion wird eine Steigeinrichtung mit den Sensoren bestückt und dann im Zwischenraum zwischen den Rotorblättern und dem Turm installiert. Durch das Verfahren entlang der Steigeinrichtung können die Kameras die Rotorblätter über ihre gesamte Länge abtasten. Nachteilig hierbei ist, dass die Rotorblätter immer nur von einer Seite mit den Kameras erfasst werden, so dass keine vollständige Oberflächeninspektion möglich ist. Ein weiterer Nachteil besteht darin, dass die Montage der Steigeinrichtung mit den Kameras sehr aufwändig ist und zudem vor jeder Inspektion neu durchgeführt werden muss.

Der Erfindung liegt die Aufgabe zugrunde, eine Inspektionsvorrichtung auszubilden, welche bei geringem konstruktivem Aufwand eine verbesserte Funktionalität aufweist.

Zur Lösung dieser Aufgabe sind die Merkmale des Anspruchs 1 vorgesehen. Vorteilhafte Ausführungsformen und zweckmäßige Weiterbildungen sind in den Unteransprüchen beschrieben.

Die erfindungsgemäße Vorrichtung dient zur Inspektion von Rotorblättern einer Windkraftanlage. Die Rotorblätter sind in oder an einem Turm gelagert. Eine höhenverstellbare Sensoranordnung ist vorgesehen, mittels derer eine Inspektion der Rotorblätter über deren gesamten Längen durchführbar ist. Weiterhin sind Stellmittel für die Rotorblätter vorgesehen, welche dazu ausgebildet sind, die Rotorblätter um ihre Längsachsen in einem Winkelbereich von 360° zu drehen, so dass mit der Sensoranordnung die gesamten Oberflächen der Rotorblätter erfassbar sind.

Ein wesentlicher Vorteil der erfindungsgemäßen Vorrichtung besteht darin, dass mit dieser eine reproduzierbare Inspektion der Rotorblätter über deren gesamten Oberflächen ermöglicht wird, das heißt es wird eine vollständige Inspektion der Rotorblätter gewährleistet.

Durch die Höhenverstellbarkeit der Sensoranordnung, die vorteilhaft durch eine Steigeinrichtung realisiert ist, kann die Sensoranordnung jeweils über die gesamte Länge eines zu untersuchenden Rotorblatts verfahren werden. Vorteilhaft wird hierzu das Rotorblatt so verfahren, dass es direkt vor der Steigeinrichtung so angeordnet ist, dass die Längsachse des Rotorblatts parallel zur Längsachse der Steigeinrichtung ausgerichtet ist. Da die Steigeinrichtung in oder am Turm in einer bestimmten, festen Position installiert ist, sind in allen Höhenlagen der Sensoranordnung an der Steigeinrichtung die Abstände der Sensoranordnung zum Rotorblatt bekannt. Damit ist für alle Messungen mit der Sensoranordnung ein genauer Bezugspunkt der Sensoranordnung zum Rotorblatt gegeben.

Ein weiterer wesentlicher Aspekt der erfindungsgemäßen Vorrichtung besteht darin, dass mit den Stellmitteln das zu untersuchende Rotorblatt um den vollen Winkelbereich von 360° um seine Längsachse gedreht werden kann und nicht wie sonst üblich um einen Winkelbereich von etwa 90°.

Bei der Durchführung der Inspektion eines Rotorblatts kann dann für jede Höhenlage der Sensoranordnung an der Steigeinrichtung das Rotorblatt in diskreten Winkelschritten, die sich vorzugsweise über den vollen Winkelbereich von 360° erstrecken, um seine Längsachse gedreht werden. Für jede eingestellte Winkelposition kann dann das Rotorblatt mit der Sensoranordnung vermessen werden. Aus der Gesamtheit der dabei registrierten Sensorsignale der Sensoranordnung kann somit die gesamte Oberfläche des Rotorblatts auf Fehler untersucht werden.

Gemäß einer vorteilhaften Ausführungsform der Erfindung ist die Steigeinrichtung mit der Sensoranordnung im Turm angeordnet oder in einer am Turm angeordneten Gehäusekonstruktion integriert.

Die Steigeinrichtung und die Sensoranordnung bilden somit integrale Elemente des Turms der Windkraftanlage. Die Steigeinrichtung und Sensoranordnung sind somit dauerhaft in oder am Turm der Windkraftanlage montiert. Dadurch ergibt sich als wesentlicher Vorteil, dass die Komponenten der erfindungsgemäßen Inspektionsvorrichtung nicht vor jeder durchzuführenden Inspektion neu montiert werden müssen. Dadurch wird eine erhebliche Reduzierung des Montageaufwands zur Durchführung der Inspektionen erzielt.

Gemäß einer besonders vorteilhaften Ausführungsform ist die Sensoranordnung der Inspektionsvorrichtung als optische Sensoranordnung ausgebildet. Mit der optischen Sensoranordnung wird eine sehr genaue und umfangreiche Inspektion der Rotorblätter ermöglicht.

Besonders vorteilhaft weist die optische Sensoranordnung wenigstens einen Distanzsensor auf.

Ein wesentlicher Vorteil besteht hierbei darin, dass der oder die Distanzsensoren an der Steigeinrichtung im oder am Turm in definierten, bekannten Sollpositionen angeordnet sind. Dadurch sind für die Distanzmessungen, die mit dem oder den Distanzsensoren durchgeführt werden, stets exakte Referenzpunkte gegeben. Dadurch kann mit dem oder den Distanzsensoren exakt und reproduzierbar das Distanzprofil der jeweils zu vermessenden Rotorblätter bestimmt werden. Diese Messwerte können vorteilhaft dazu genutzt werden, eine Spurlaufkontrolle des jeweiligen Rotorblatts durchzuführen.

Weiterhin kann die optische Sensoranordnung der erfindungsgemäßen Inspektionsvorrichtung eine Kamera oder eine Anordnung von mehreren Kameras aufweisen. Mit der oder den Kameras kann die Oberfläche eines Rotorblatts auf Beschädigungen aller Art untersucht werden. Wesentlich ist, dass durch die Drehbarkeit der Rotorblätter um den vollen Winkelbereich von 360° mit den Kameras die gesamte Oberfläche des Rotorblatts auf eventuell vorhandene Fehler untersucht werden kann. Mit den Kameras können Oberflächenfehler aller Art exakt erfasst werden. Insbesondere können Risse in den Rotorblättern oder Delaminationen, das heißt Ablösungen der Farbschichten der Rotorblätter detektiert werden.

Gemäß einer vorteilhaften Ausführungsform der Erfindung ist eine Steuer- und Auswerteeinheit vorgesehen, mittels derer die Steigeinrichtung, die Sensoranordnung und die Stellmittel gesteuert werden.

Damit wird ein konstruktiv einfacher Aufbau der Steuerungselemente der Inspektionsvorrichtung erhalten. Mit der zentralen Steuer- und Auswerteeinheit können die Einstellungen der Steigeinrichtung, der Stellmittel und der Sensoranordnung aufeinander abgestimmt werden.

Besonders vorteilhaft erfolgt in der Steuer- und Auswerteeinheit die Auswertung der Sensorsignale der Sensoranordnung, wobei die Sensorsignale der Sensoranordnung in Abhängigkeit der Position der Steigeinrichtung und in Abhängigkeit der mittels der Stellmittel eingestellten Winkelstellungen der Rotorblätter ausgewertet werden.

Mit dieser Auswertung können für die gesamten Oberflächen der Rotorblätter einerseits Distanzprofile und andererseits Bildinformationen über die Oberflächenbeschaffenheiten der Rotorblätter gewonnen werden, wodurch eine vollständige Prüfung des jeweiligen Rotorblatts ermöglicht wird.

Die Erfindung wird im Folgenden anhand der Zeichnungen erläutert. Es zeigen:
- Figur 1:: Schematische Darstellung einer Windkraftanlage mit einer Inspektionsvorrichtung für die Rotorblätter der Windkraftanlage.
- Figur 2:: Detaildarstellung einer Steigeinrichtung mit einer an dieser verfahrbaren Sensoranordnung als Komponenten der Inspektionsvorrichtung gemäß Figur 1.
- Figur 3:: Blockschaltbild der Elektronikkomponenten der Inspektionsvorrichtung gemäß Figur 1.
- Figur 4:: Schematische Darstellung eines um seine Längsachse drehbaren Rotorblatts der Windkraftanlage gemäß Figur 1.
- Figur 5:: Variante der Ausführungsform gemäß Figur 1.

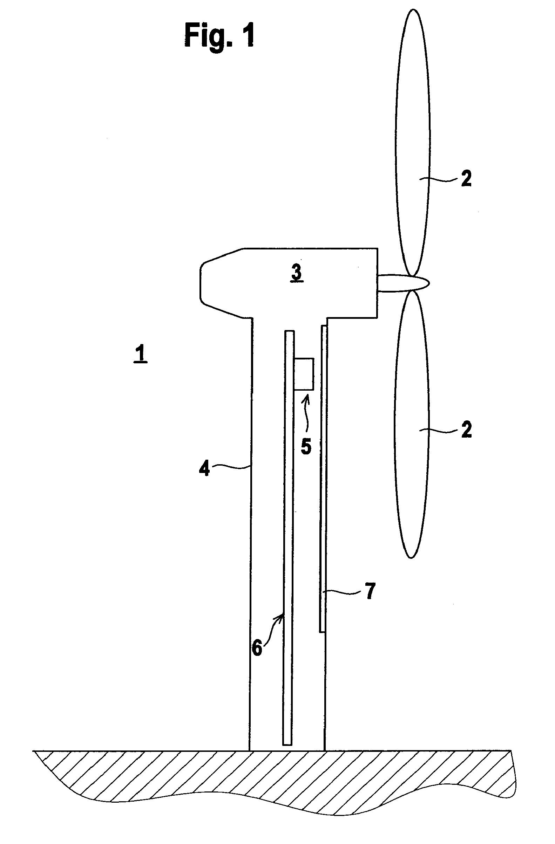

Figur 1 zeigt schematisch eine Windkraftanlage 1, die eine Anordnung von mehreren Rotorblättern 2 aufweist, die auf einem Aufsatz 3 auf einem Turm 4 der Windkraftanlage 1 gelagert sind. In dem Aufsatz 3 kann in bekannter Weise eine Turbine oder dergleichen gelagert sein, die die durch die Drehung der Rotorblätter 2 generierte kinetische Energie in elektrische Energie umwandelt. Die Anzahl der Rotorblätter 2 kann je nach Art der Windkraftanlage 1 variieren. Im vorliegenden Fall weist die Windkraftanlage 1 drei identisch ausgebildete Rotorblätter 2 auf.

Zur Feststellung von Schäden an den Rotorblättern 2 ist im Turm 4 eine Inspektionsvorrichtung angeordnet. Die Inspektionsvorrichtung weist eine Sensoranordnung 5 auf, die im vorliegenden Fall von einer optischen Sensoranordnung 5 gebildet ist. Die Sensoranordnung 5 bildet eine Baueinheit, die in ihrer Gesamtheit höhenverstellbar im Turm 4 so gelagert ist, dass die Sensoranordnung 5 über die gesamte Länge eines vor die Sensoranordnung 5 eingefahrenen, mit vertikaler Längsachse vor dem Turm 4 liegenden Rotorblatt 2 verfahren werden kann. Für diese Höhenverstellung ist eine Steigeinrichtung 6 vorgesehen, an welcher die Sensoranordnung 5 gelagert ist. Um mit der als optische Sensoranordnung ausgebildeten Sensoranordnung 5 das jeweilige Rotorblatt 2 abtasten und detektieren zu können ist entlang des Verfahrwegs der Sensoranordnung 5 in der Wand des Turms 4 ein lichtdurchlässiges Fenster 7 eingearbeitet. Alternativ könnte in der Wand des Turms 4 eine Öffnung vorgesehen sein, die mit einer verfahrbaren Abdeckung abschließbar ist. Sobald eine Prüfung eines Rotorblatts 2 mit der Sensoranordnung 5 erfolgen soll, kann die Abdeckung aus dem Bereich der Öffnung herausgefahren werden, so dass die Öffnung freiliegt.

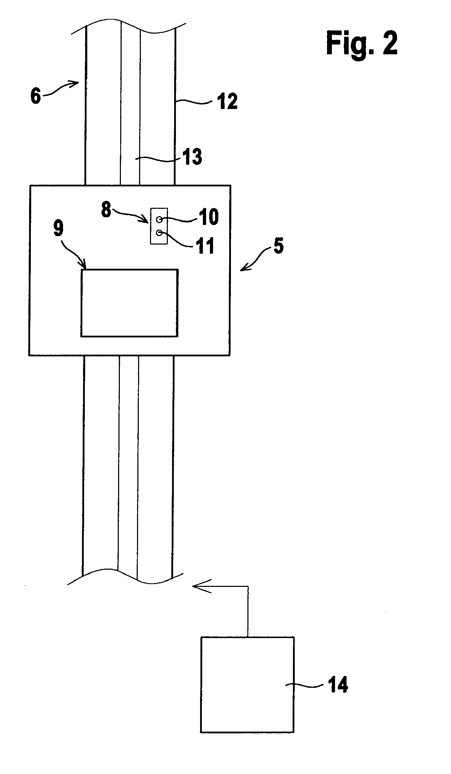

Figur 2 zeigt eine Ausführungsform der optischen Sensoranordnung 5 und der zugeordneten Steigeinrichtung 6. Die optische Sensoranordnung 5 weist im vorliegenden Fall einen Distanzsensor 8 und eine Kamera 9 auf. Generell kann die optische Sensoranordnung 5 auch mehrere Distanzsensoren 8 beziehungsweise mehrere Kameras 9 aufweisen. Der Distanzsensor 8 weist einen Lichtstrahlen emittierenden Sender 10, insbesondere eine Laserdiode, auf. Weiterhin weist der Distanzsensor 8 einen Lichtstrahlen empfangenden Empfänger 11, beispielsweise eine Photodiode, auf. Die Entfernungsmessung kann beispielsweise nach dem Pulslaufzeitverfahren erfolgen. Die Kamera 9 weist eine matrixförmige Anordnung von Pixeln auf, beispielsweise kann die Kamera 9 als CMOS- oder CCD-Array ausgebildet sein.

Die Steigeinrichtung 6 weist eine in vertikaler Richtung verlaufende Führung auf, an welcher die optische Sensoranordnung 5 verfahrbar gelagert ist. Die Führung ist im vorliegenden Fall von einer Führungsschiene 12 gebildet. Zum Verfahren der optischen Sensoranordnung 5 weist die Steigeinrichtung 6 ein Antriebssystem auf. Beispielsweise kann das Antriebssystem als Band- oder Kettenantrieb ausgebildet sein, bei welchem ein angetriebenes Führungsmittel 13 in Form einer Kette oder eines Bands in der Führungsschiene 12 geführt wird, wobei das Führungsmittel 13 mittels eines Antriebs 14 angetrieben wird.

Zur Durchführung der Prüfung eines Rotorblatts 2 mittels der Sensoranordnung 5 kann das Rotorblatt 2 durch Stellmittel 15 um 360° bezüglich seiner Längsachse gedreht werden.

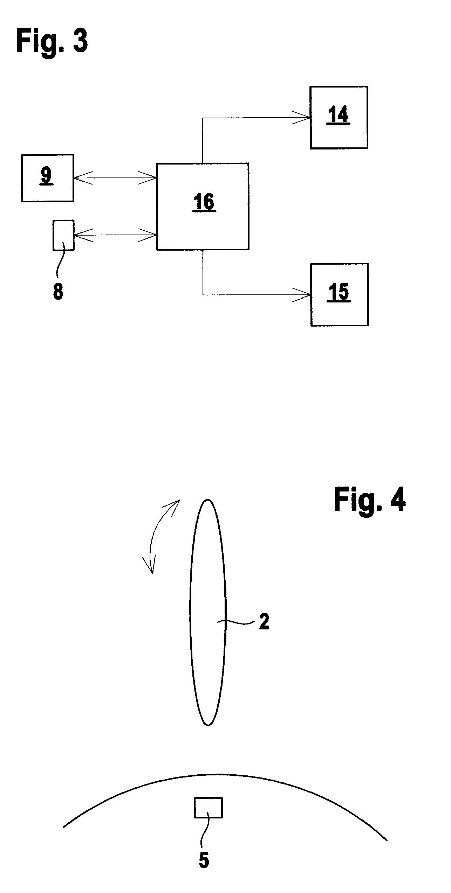

Die Steuerung der Komponenten der Inspektionsvorrichtung, insbesondere auch die Steuerung des Antriebs 14 des Antriebssystems, der Steigeinrichtung 6 und der Stellmittel 15 für die Rotorblätter 2, erfolgt wie in Figur 3 dargestellt über eine zentrale Steuer- und Auswerteeinheit 16, die von einem Mikroprozessorsystem oder dergleichen gebildet ist, und welche innerhalb des Turms 4 angeordnet ist. Die Steuer- und Auswerteeinheit 16 steuert auch die optische Sensoranordnung 5, das heißt den Distanzsensor 8 und die Kamera 9. Zudem erfolgt in der Steuer- und Auswerteeinheit 16 eine Auswertung der in der Sensoranordnung 5 generierten Sensorsignale, und zwar in Abhängigkeit der aktuell eingestellten Höhenlage der Sensoranordnung 5 und in Abhängigkeit der aktuell mit den Stellmitteln 15 eingestellten Drehposition des zu untersuchenden Rotorblatts 2.

Um ein Rotorblatt 2 auf eventuelle Fehler zu untersuchen wird dieses zunächst in eine vertikale Position eingefahren, in welcher das Rotorblatt 2 vor dem Fenster 7 beziehungsweise vor der Sensoranordnung 5 liegt.

Dann wird mit der Sensoranordnung 5 sukzessive das Rotorblatt 2 über seine gesamte Länge abgetastet, in dem die Steuer- und Auswerteeinheit 16 die Sensoranordnung 5 an der Steigeinrichtung 6 in diskreten Sollpositionen, die über die gesamte Länge verteilt sind, positioniert.

Für jede Sollposition der Sensoranordnung 5 wird dann mittels der Stellmittel 15 das zu untersuchende Rotorblatt 2 wie in Figur 4 veranschaulicht, in diskreten Winkelschritten um insgesamt 360° gedreht und so in diskreten Winkelpositionen positioniert. In jeder Winkelposition wird dann das Rotorblatt 2 mit der Sensoranordnung 5 abgetastet.

Damit wird das zu untersuchende Rotorblatt 2 sowohl mit dem Distanzsensor 8 als auch mit der Kamera 9 über deren gesamten Oberfläche erfasst. Mit dem Distanzsensor 8 wird ein Distanzprofil für das Rotorblatt 2 erfasst, das heißt über die gesamte Länge des Rotorblatts 2 werden die Distanzen des Rotorblatts 2 zum Distanzsensor 8 ermittelt. Anhand der mit dem Distanzsensor 8 ermittelten Distanzmesswerte kann beispielsweise in der Steuer- und Auswerteeinheit 16 eine Spurlaufkontrolle des Rotorblatts 2 durchgeführt werden, insbesondere auch während des Betriebs der Windkraftanlage 1. Anhand der mit der Kamera 9 erfassten Bilder kann in der Steuer-und Auswerteeinheit 16 eine Fehlerkontrolle der gesamten Oberfläche des Rotorblatts 2 durchgeführt werden. Insbesondere kann ermittelt werden, ob in der Oberfläche des Rotorblatts 2 Risse vorhanden sind oder ob Delaminationen, das heißt Ablösungen der Farbschichten auf der Oberfläche des Rotorblatts 2 vorliegen.

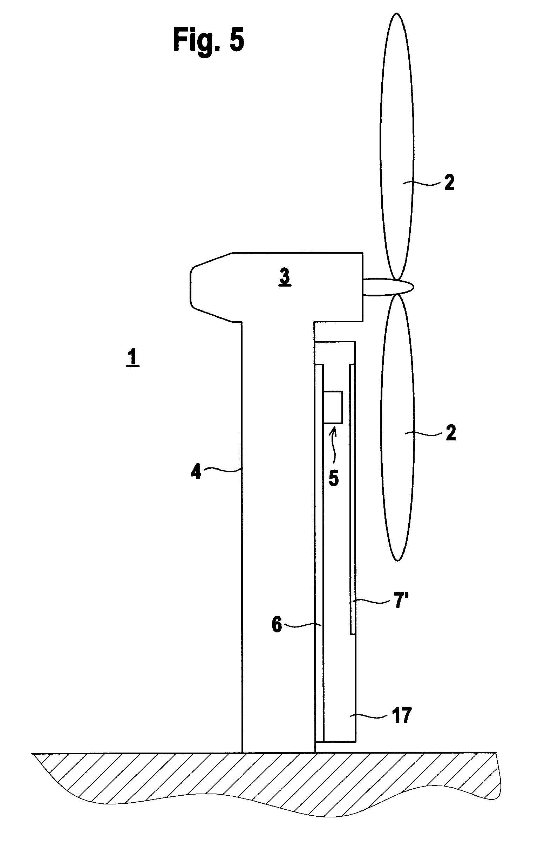

Figur 5 zeigt eine Variante der Anordnung gemäß Figur 1. Die Anordnung von Figur 5 unterscheidet sich von der Ausführungsform gemäß Figur 1 dadurch, dass die Steigeinrichtung 6 mit der Sensoranordnung 5 nicht im Turm 4 der Windkraftanlage 1 angeordnet ist. Vielmehr ist die Steigeinrichtung 6 mit der Sensoranordnung 5 an der Außenseite des Turms 4 angeordnet und ist dort innerhalb eines Schutzgehäuses 17 integriert, welches ein Fenster 7' aufweist, durch welches Lichtstrahlen der Sensoranordnung 5 geführt werden können. Das Schutzgehäuse mit der Steigeinrichtung 6 und der Sensoranordnung 5 wird bei Bedarf am Turm 4 installiert und kann, wenn keine Messungen mit der Sensoranordnung 5 durchgeführt werden müssen vom Turm 4 abgebaut und an einem Lageort gelagert werden.

### Bezugszeichenliste

- (1): Windkraftanlage
- (2): Rotorblatt
- (3): Aufsatz
- (4): Turm
- (5): Sensoranordnung
- (6): Steigeinrichtung
- (7): Fenster
- (7'): Fenster
- (8): Distanzsensor
- (9): Kamera
- (10): Sender
- (11): Empfänger
- (12): Führungsschiene
- (13): Führungsmittel
- (14): Antrieb
- (15): Stellmittel
- (16): Steuer- und Auswerteeinheit
- (17): Schutzgehäuse

## Patentansprüche

1. Vorrichtung zur Inspektion von Rotorblättern (2) einer Windkraftanlage (1), wobei in oder an einem Turm (4), an welchem die Rotorblätter (2) gelagert sind, eine höhenverstellbare Sensoranordnung (5) vorgesehen ist, mittels derer eine Inspektion der Rotorblätter (2) über deren gesamten Längen durchführbar ist, und wobei Stellmittel (15) für die Rotorblätter (2) vorgesehen sind, welche dazu ausgebildet sind, die Rotorblätter (2) um ihre Längsachsen in einem Winkelbereich von 360° zu drehen, so dass mit der Sensoranordnung (5) die gesamten Oberflächen der Rotorblätter (2) erfassbar sind.

2. Vorrichtung nach Anspruch 1, **dadurch gekennzeichnet, dass** die Sensoranordnung (5) an einer Steigeinrichtung (6) vorgesehen ist.

3. Vorrichtung nach Anspruch 2, **dadurch gekennzeichnet, dass** die Steigeinrichtung (6) mit der Sensoranordnung (5) im Turm (4) angeordnet ist oder in einer am Turm (4) angeordneten Gehäusekonstruktion integriert ist.

4. Vorrichtung nach Anspruch 3, **dadurch gekennzeichnet, dass** die Sensoranordnung (5) eine optische Sensoranordnung (5) ist.

5. Vorrichtung nach Anspruch 4, **dadurch gekennzeichnet, dass** die optische Sensoranordnung (5) wenigstens einen Distanzsensor (8) aufweist.

6. Vorrichtung nach Anspruch 5, **dadurch gekennzeichnet, dass** mittels der Sensorsignale des oder der Distanzsensoren (8) eine Spurlaufkontrolle der Rotorblätter (2) durchgeführt wird.

7. Vorrichtung nach einem der Ansprüche 4 bis 6, **dadurch gekennzeichnet, dass** die optische Sensoranordnung (5) wenigstes eine Kamera (9) aufweist.

8. Vorrichtung nach Anspruch 7, **dadurch gekennzeichnet, dass** mittels der Sensorsignale der oder jeder Kamera (9) eine Oberflächenprüfung der Rotorblätter (2) durchgeführt wird.

9. Vorrichtung nach einem der Ansprüche 1 bis 8, **dadurch gekennzeichnet, dass** eine Steuer- und Auswerteeinheit (16) vorgesehen ist, mittels derer die Steigeinrichtung (6), die Sensoranordnung (5) und die Stellmittel (15) gesteuert werden.

10. Vorrichtung nach Anspruch 9, **dadurch gekennzeichnet, dass** in der Steuer- und Auswerteeinheit (16) die Auswertung der Sensorsignale der Sensoranordnung (5) erfolgt, wobei die Sensorsignale der Sensoranordnung (5) in Abhängigkeit der Position der Steigeinrichtung (6) und in Abhängigkeit der mittels der Stellmittel (15) eingestellten Winkelstellungen der Rotorblätter (2) ausgewertet werden.
